# EUROPEAN PATENT APPLICATION

(11) **EP 0 841 607 A1**
(43) Date of publication of application: **13.05.1998**
(21) Application number: 97203457.3
(22) Date of filing: 07.11.1997
(51) Int. Cl.: G05D 23/19, G05D 23/32

(54) **Thermostatic heat control**

(30) Priority: 07.11.1996 NL 1004467
(71) Applicant: ENCON B.V., NL-9482 TW Tynaarlo (NL)
(72) Inventor: Willemsen, Johannes Albertus Hendrikus, 9482 RZ Tynaarlo (NL)
(74) Representative: Smulders, Theodorus A.H.J., Ir.

(57) **Abstract**

A heating system having a thermostat (8) which switches temperature-dependently between an "on" condition and an "off" condition and which is heated anticipatorily. The power of the heating system is controlled between a switched-off position, one or more intermediate positions and the maximum power by a control unit (15) depending on the duration of at least "on" or "off" phases during which these "on" or "off" conditions respectively occur. There are further described a heating boiler and a method utilizing the same type of control. Because the lengths of the time intervals during which the thermostat is in the "on" and/or "off" condition are measured, it is possible to obtain with a simple room thermostat - which is usually already present when a heating boiler is replaced - having only "on"-"off" signalling an indication of the difference between the set temperature and the actual temperature, on the basis of which the continuous power of the heat source can be controlled.

## Description

The invention relates to a heating system according to the preamble of claim 1, to a heating boiler according to the preamble of claim 2 and to a control method according to preamble of claim 3, which are known from practice.

Generally, for controlling the heating of, for instance, a house or a small office, a thermostat is used which below a particular temperature is in an "on" condition, which changes from the "on" condition into an "off" condition when a switch-off temperature - which temperature is in principle above the set temperature - is exceeded, and which changes again from the "off" condition into an "on" condition when the temperature drops below a switch-on temperature - which temperature is in principle below the set temperature.

The control of the energy supply connected to such thermostat follows the condition of the thermostat and, in response to the transitions of the thermostat, changes from a position "on", in which the heat source is fed with energy, into a position "off", in which no energy is fed to the heat source, and vice versa.

The difference between the switch-on temperature and the switch-off temperature is typically about 1.5 °C. Because it is little comfortable if the temperature in a room goes up and down each time between the limits of such temperature range, such thermostats generally comprise an anticipation heating which provides that in the "on" condition, the thermally controlled operating structure of the thermostat is heated. Because of this heating, it changes from the "on" condition into the "off" condition before the temperature in the environment has actually reached the switch-off temperature. As a result, temperature fluctuations in the heated room are limited.

A drawback of such control is that the temperature in the room is still subject to fairly strong fluctuations and that particularly if the outside temperature is not much lower than the temperature in the room, the heater each time operates at full power for a relatively short period, which is unfavorable for the efficiency of the heater and, if a burner is used as heat source, leads to relatively high emissions of nitrogen oxides.

Further, the alternation between full power and the switched-off condition of the heat source causes a considerable thermal load on the heat source and any heat-transferring means outside that heat source, which imposes high demands on the construction and the materials applied and, in a given embodiment, leads to a shortening of the lifetime and, if applicable, a greater chance of leakage of the heat-transfer medium or flue gases. Further, the continuous temperature fluctuations of the heating system often lead to noise emissions caused by stick-slip effects between surfaces moving along each other as a consequence of shrinkage or expansion.

Further, other heating systems are known from practice, wherein the heat source, in addition to a position in which it is off and a position in which it operates at full power, can also operate in one or more intermediate positions or is even continuously controllable between the extreme positions. An example of such heating system is a heating system having a modulating control. In such systems, the continuous output power of the heat source is controlled depending on the difference between the temperature set and the temperature measured.

A drawback of such systems is that they are relatively costly.

The object of the invention is to provide a heating system, a heating boiler and a method for controlling a heating with a gradual or continuous control of the continuous output power, wherein the drawbacks outlined have been overcome, but which can be applied at lower costs than the above systems with a controllable continuous output.

In a first embodiment of the present invention, this object is realized by designing a heating system of the preamble according to the characterizing features of claim 1. In a second embodiment of the present invention, this object is realized by designing a heating boiler of the preamble according to characterizing features of claim 2. In a third embodiment of the present invention, this object is realized by designing a method of the preamble according to the characterizing features of claim 3.

Because the use of the present invention involves measuring the time intervals during which the thermostat is in the "on" and/or "off" condition, it is possible to obtain with a simple room thermostat - usually already present when a heating boiler is being replaced - having only an "on"-"off" signalling, an indication of the difference between the set temperature and the actual temperature, on the basis of which the continuous output power of the heat source can be controlled. Hence, it is not necessary to apply a special, relatively costly thermostat for that purpose, and in general, in the case of a partial replacement of an existing heating system, the necessity of removing the old thermostat and installing a new thermostat is also done away with.

Within a particular temperature range, which in practice typically has a width of about 1.5 °C, a thermostat having anticipation heating, at a constant temperature, regularly changes from the "on" condition into the "off" condition. At a given set temperature, the "on" phases are longer and the "off" phases are shorter according as the actual temperature is lower. In this manner, the on/off thermostat having anticipation heating can be used as quasi-continuously operating sensor for determining the difference between the set temperature and the actual temperature and, with such simple thermostat, a control in several steps or even a continuous control of the continuous power of a heating can be achieved.

Hereinafter, the invention will be further illustrated and explained on the basis of some diagrams, wherein:
Fig. 1 is a schematic representation of a heating system according to the invention with a heating boiler according to the invention;
Fig. 2 is a block diagram of a control system of an example of a heating according to the invention;
Fig. 3 is an example of a control algorithm for a control unit of a heating system or of a heating boiler according to the invention;
Fig. 4 is a diagram of an example of a behavior of an example of a heating system according to the invention, to which Figs. 1 and 2 also relate;
Fig. 5 is a diagram of an example of a behavior of a second example of a heating system according to the invention; and
Fig. 6 is a diagram of an example of a behavior of a third example of a heating system according to the invention.

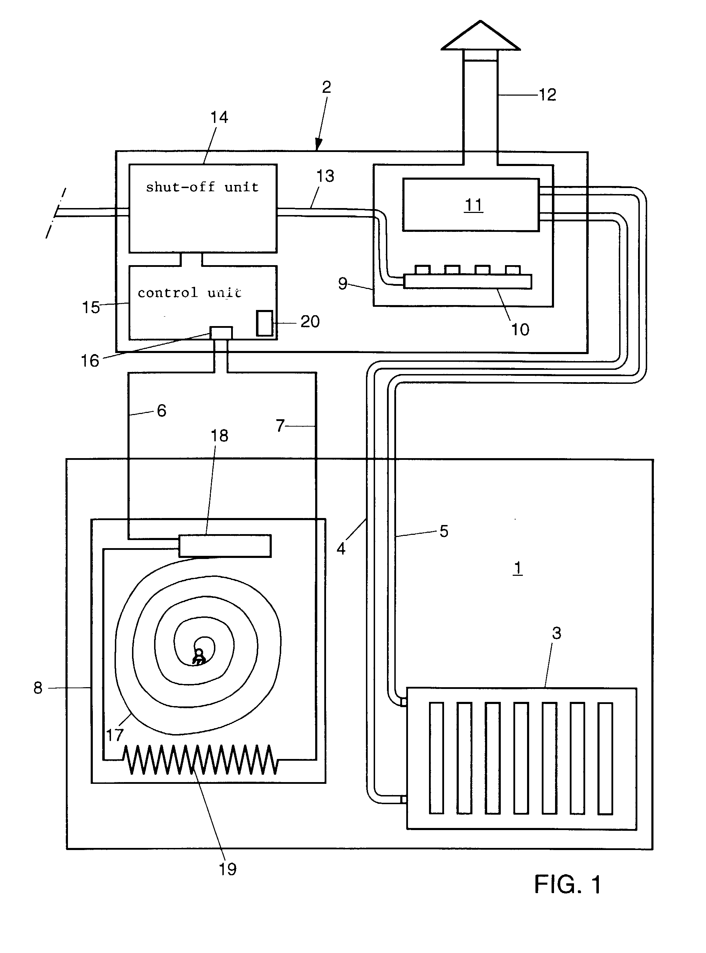

The invention will first be explained with reference to a preferred exemplary embodiment to which Figs. 1-4 relate. Next, a number of alternative possibilities within the framework of the invention will be discussed.

The heating system shown in Fig. 1 for heating a room 1 is composed of a heating boiler 2 outside the room 1, a radiator 3 in the room 1, pipes 4, 5 and a pump (not shown) for circulating a heat-transfer medium such as water between the boiler 2 and the radiator 3, and a thermostat 8 in the room 1, connected via lines 6, 7 to the heating boiler 2.

The boiler 2 is provided with a furnace 9 containing a heat source in the form of a burner 10 and a heat exchanger 11. To the furnace 9, a flue tube 12 connects. Connecting to the burner 10 are a fuel-feed pipe 13 and a passage (not shown) for admitting ambient air. The heating boiler 2 further comprises a shut-off unit 14 which is incorporated into the fuel-feed pipe 13 and adapted to control the feed of fuel via the pipe 13, wherein the shut-off unit 14 can assume a closed position, an open position and fourteen intermediate positions (i.e. sixteen position in total) for dosing the feed of fuel to the burner 10. It is observed that it is also possible to apply a steplessly adjustable shut-off unit.

The shut-off unit 14 is coupled to a control unit 15 for controlling the shut-off unit. The control unit 15 has a connecting gate 16, to which the lines 6, 7 leading to the thermostat 8 are connected.

As is known per se, the thermostat 8 is provided with a thermally sensitive operating element 17 in the form of a spiral-shaped bimetal. The free end of the bimetal carries a switch 18 which, depending on its incline, is closed and thereby interconnects the lines 6 and 7, or open. Included in the line 7 is a heating element 19 in the form of an anticipation resistor, which heats the operating element 17 to a slight degree when the switch 18 is closed. From a functional point of view, the closed condition of the switch 18 constitutes the "on" condition of the circuit in which that switch 18 of the thermostat 8 according to the present example is included, and the open condition constitutes the "off" condition of that circuit. The thermostat 8 is thus adapted to signal, by means of "on" and "off" signals, the temperature of the room 1 to the control unit 15.

Integrated into the control unit 15 is a clock 20 for generating time signals. The control unit 15 is adapted to control the shut-off unit 14 in response to the condition of the circuit in which the switch 18 of the thermostat 8 is included, in other words, in response to "on" and "off" signals from the thermostat 8. Further, the control unit 15 is programmed so that the duration of the "on" and "off" phases during which the "on" and "off" conditions respectively of the circuit occur, determines which of the possible positions the shut-off unit 14 is brought into.

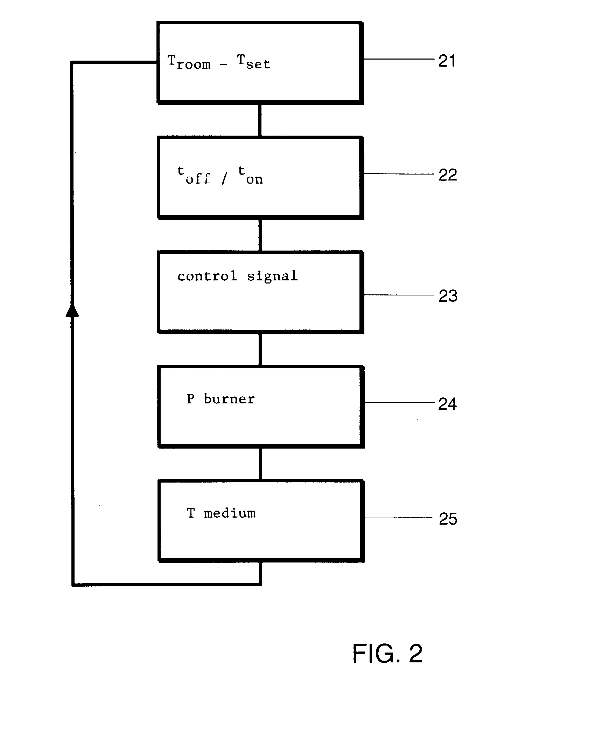

In general, the operation of the system shown in Fig. 1 and described hereinabove will be explained with reference to the block diagram shown in Fig. 2. In each case, the starting point of each control cycle is that there is or there is not an essential difference between the set temperature and the actual temperature in the room 1, as indicated by block 21.

This difference has consequences to the relation between the durations of the "on" and "off" phases of the thermostat 8, as indicated by block 22. More in particular, if the actual temperature in the room 1 is much (typically at least 0.75 to 1 °C) lower than the set temperature, in spite of the heat-up effect of the heating element 19, the thermostat 8 will continuously be in the "on" condition. If the actual temperature in the room 1 is much (typically likewise 0.75 to 1 °C) higher than the set temperature, the thermostat 8 will continuously be in the "off" condition. It is observed that the setting temperature of the thermostat is compensated for the heat-up effect, occurring in the "on" condition, of the anticipation heating. If the difference between the set temperature and the actual temperature in the room 1 is less than the margins mentioned, the thermostat will, under the influence of the anticipation heating in the "on" condition, alternately be in the "on" and the "off" condition. If the actual temperature in the room is at the bottom of this range, around the set temperature, the "on" phases are relatively long and the "off" phases are relatively short. Conversely, if the actual temperature in the room is at the top of this range, around the set temperature, the "on" phases are relatively short and the "off" phases are relatively long.

On the basis of the relation between the duration of the "on" phases and the duration of the "off" phases, a control signal is generated by the control unit 15, as represented by block 23. This control signal 23 is increased relative to an earlier control signal if the "on" phases are relatively long and the "off" phases relatively short and the other way round. In this manner, a control signal 23 is generated which, in the control unit 15 according to the present example, can have sixteen values of from "0" to "15", the position "0" implying complete closure of the fuel-feed pipe 13 and the position "15" implying complete opening of the fuel-feed pipe 13. The other positions constitute successive intermediate positions. It is readily understood that other numbers of positions, as well as a continuous control may also be applied.

Because the shut-off unit 14 is controlled in correspondence to the control signal 23, the output power (block 24) converted into heat by the burner 10 corresponds to the relevant control signal 23. This in turn has an effect on the temperature of the heat-transfer medium (block 25), which increases according as the actual burner output 24 is greater.

Eventually, the temperature 25 of the heat-transfer medium affects the actual temperature in the room 21, which completes the control circuit.

The room thermostat used for the control according to the invention provides information about the duration of the "on" and "off" phases at a low frequency only, corresponding to the duration of those phases, as a consequence of which, in unfavorable cases, a change in the room temperature is not expressed until many minutes after that change in the information regarding the lengths of the "on" and "off" phases. Hence, it is of particular importance that the control signal 23 be caused to react to the lengths of the "on" and "off" phases in such a manner that on the one hand a steady and stable behavior is obtained, with slow adjustment of the burner output, so as to prevent overshoot, but that on the other hand, the behavior of the control reacts sufficiently promptly to sudden changes in the set temperature and to sudden changes in environmental influences, such as opening a door or window, lighting a wood-burning stove, or incident sun radiation.

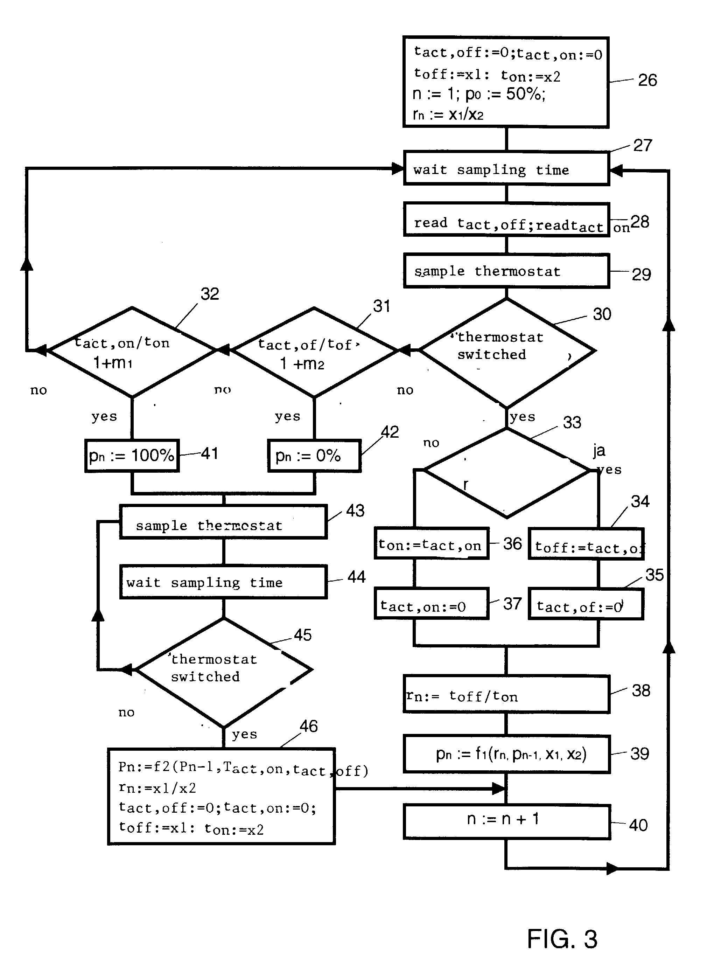

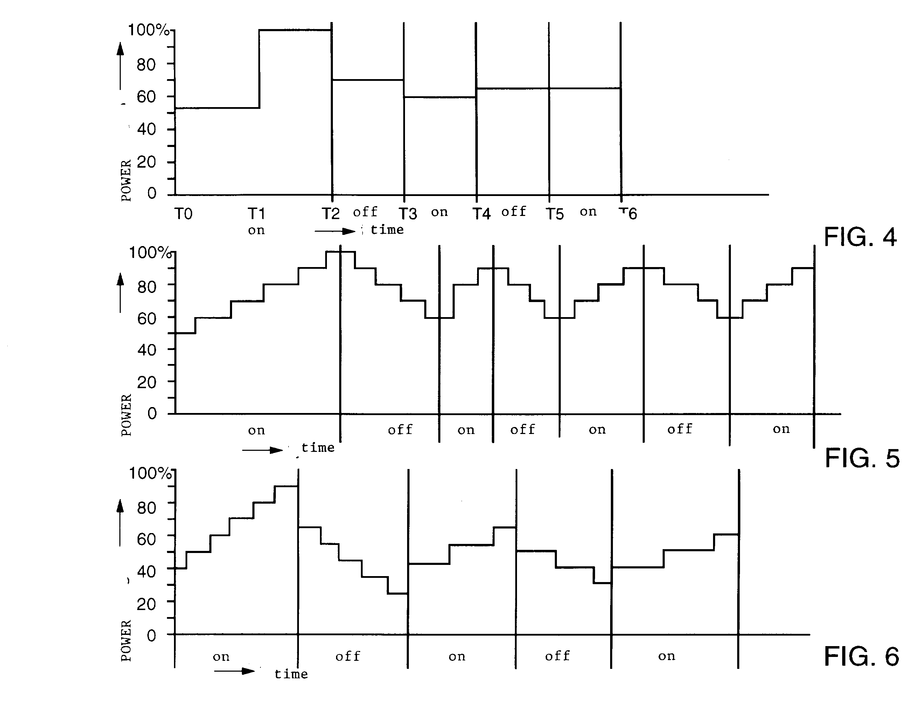

These requirements can for instance be met by an algorithm for generating, starting from the "on" and "off" signals from the thermostat 8, control signals as shown in Fig. 3. The behavior of this algorithm in an exemplary situation is shown in Fig. 4.

As start of the algorithm, a number of variables are initialled as designated by step 26. More in particular, the actual duration of the current "on" and "off" phases t_{act,on} and t_{act,off}, reference values x₁ and x₂ for the duration tₒₙ and t_{off} of fictitious earlier "on" and "off" phases, a counter n, the output power pₙ, and the ratio rₙ between the lengths of "on" and "off" phases are initialized as indicated by step 26.

The starting value of the output power pₙ can for instance be set by the person operating the installation depending on the expected continuous output power. An estimation of the expected, required continuous power can for instance be obtained on the basis of observations by the operator of the prevalent outside temperature. Then, the output power can be properly controlled and any waste of energy due to temporary, unnecessary heating can be prevented.

The reference values x₁ and x₂ and the lengths of the "on" and "off" phases in the thermostat 8 applied are preferably adjusted to each other.

The following step, designated by 27, consists in waiting the sampling time. Preferably, this sampling time is very short in relation to the average duration of the "on" and "off" phases, for instance about 1 second.

Next, the timers of the actual duration of the current phase are read (step 28). During the "on" phases, the timer from which t_{act,off} is read stands still and the other way round, i.e. if an "on" phase is started with, the variable t_{act,off} first holds the value zero.

Directly after that, the condition of the thermostat 8 is sampled (step 29) . If over the connecting gate to which the lines 6, 7 leading to the switch 18 are connected, a flow of current and hence a closed switch 18 is observed, an "on" condition is registered.

This is followed by a first decision in the algorithm (step 30). If the condition of the thermostat has changed compared with the previously registered condition (outcome "yes"), a fine-adjustment cycle is passed through for the stationary condition. If the outcome is "no", it is checked in steps 31 and 32 whether the actual running time of an "off" phase or "on" phase respectively deviates relative to the registered duration of the corresponding, most recently completed phase (at the beginning the reference values x₁ and x₂ respectively) more than a predetermined relative margin m₂ and m₁ respectively.

If an "off" phase takes longer than the current value toff for the duration of an "off" phase plus a percentage expressed by the variable m₂ (outcome of step 31 is "yes"), a cycle for a quickest possible temperature decrease is passed through. In practice, this will for instance occur when the so-called night reduction sets in or when the set temperature is set lower for whatever other reason. If an "on" phase lasts too long (outcome of step 32 is "yes"), a cycle for a quickest possible temperature increase is passed through. In practice, this will especially occur during an increase of the set temperature, for instance at the end of the night reduction. However, in most cases, the duration of the current phase will be within the accepted range and waiting the sampling time (step 27) is proceeded to again.

The fine-adjustment cycle, passed through each time after the thermostat 8 has been switched, begins with a decision step 33, whose outcome depends on the condition of the thermostat 8 according to the outcome of the latest sampling. If the thermostat 8 is in the "on" condition, the past phase was an "off" phase and the read value of t_{act, off} indicates at least approximately the duration of that past "off" phase. Accordingly, the value t_{act,off} is then declared to be the new value t_{off} of the duration of the latest completed "off" phase (step 34). Next, the actual value t_{act, off} is set at zero again, so that the duration of the following "off" phase can be followed thereby. If the thermostat 8 is in the "off" condition, the past phase was an "on" phase and essentially, the same steps are passed through for the variables t_{act,on} and tₒₙ (steps 36 and 37).

After the determination of the values for the variables tₒₙ and t_{off}, in the algorithm according to the present example the value of the variable rₙ is determined, which characterizes the relation between the duration of the most recent "on" and "off" phases (step 38).

Finally, the new control signal pₙ, which determines the output power subsequently produced by the burner, is calculated as a function of the current relation rₙ, at least one previous, set power pₙ₋₁ (preferably a history of previous set powers), and the reference values x₁ and x₂, which determine the lengths of the "on" and the "off" phases when the set temperature and the actual temperatures (step 39) correspond. The curve of the function handled in this step 39 can be selected depending on, inter alia, the inertia of the thermostat 8, the heat capacity of heating system, the maximum power of the burner, the heat capacity of the room 1 and the consideration whether a quick adjustment with possible overshoot or a slow adjustment with no or very little overshoot is preferred.

Finally, the counter n is increased (step 40) and step 27 of waiting the sampling time is returned to. Of course, it may be provided that the counter n, after having reached a particular value, is reset, for instance each 24 hours, so that the registration of the behavior of the control system during particular parts-of the day is simplified.

If for instance the sampling step 29 proves that the thermostat 8 is in the "on" condition, and if between that sampling (step 29) and the preceding sampling, the thermostat 8 has not been switched from one condition to the other condition, so that the outcome of decision step 30 is accordingly "no", the outcome of the decision step 31 is then likewise "no", because the actual value for the duration of an "off" phase is then "0", for instance due to the initialization step 26, the zero-setting step 35 or the partial re-initialization after an accelerated temperature adjustment, to be discussed hereinafter.

If, moreover, the duration of a current "on" phase, as represented by the value t_{act,on}, exceeds the current value for the duration of an "on" phase tₒₙ by a percentage greater than the value m₁, the outcome of the next step 32, consisting in comparing the actual duration of the current "on" phase t_{act,on} with the current value for the duration of an "on" phase tₒₙ, is "yes". This will for instance typically be the case when at the end of the night reduction the set temperature is suddenly increased. In order to increase the temperature in the room as soon as possible to the set temperature in such a situation, a control signal is subsequently generated, corresponding to the output power of the burner 10 being brought to 100% (step 41).

If a comparable situation presents itself during an "off" phase, which is typically the case at the beginning of the night reduction, the outcome of the decision step 31 is "yes". As a result, the decision step 32 for monitoring the current "on" phase is not arrived at, and the generation of a control signal is proceeded to, to which, in response, the shut-off unit 14 closes the fuel supply and the burner power is reduced to zero (step 42). In that case, no fuel is used if the temperature of the room 1 can drop from the current temperature to the set temperature.

Both after the complete opening of the shut-off unit 14 (step 41) and after the complete closing of the shut-off unit (step 42), a monitoring cycle follows, intended to check whether the actual temperature has passed the set temperature. This monitoring cycle is formed by sampling the thermostat 8 (step 43), waiting a sampling time (step 44), for instance just as long as during step 27, and checking whether the thermostat has already switched from one condition into the other condition (step 45). As long as the thermostat has not yet switched and the outcome of the decision step 45 is accordingly "no", this monitoring cycle is repeated.

In response to the switching of the thermostat 8, the above-mentioned partial re-initialization step 46 is proceeded to. This step serves to obtain as quickly as possible an even temperature in the room 1 according to the set temperature. To this end, according to the present example, the variables rₙ, t_{act,off}, t_{act, on}, t_{off}, and tₒₙ are initialized as in step 26 with which the algorithm begins. However, the control signal for the shut-off unit 14, which determines the power pₙ of the burner 10, is brought to a value which is a function of the power pₙ₋₁ preceding the prolonged "on" or "off" phase and the duration tₒₙ or t_{off} of the prolonged "on" or "off" phase respectively. According as the prolonged "on" or "off" phase has lasted longer, the power pₙ is set so as to deviate more strongly relative to the preceding power pₙ₋₁ (upwards or downwards respectively).

However, it is also possible to determine the power pₙ in such situations, additionally or alternatively, in another manner, for instance through comparison with the behavior of the heating system during a preceding increase or decrease about 24 hours ago. If for instance after a preceding prolonged "on" or "off" phase, an overshoot was observed in the form of subsequently relatively long "off" or "on" phases respectively, the algorithm can as it were in a self-learning manner make a temporary correction to the power pₙ, directly following a prolonged "on" or "off" phase. It is also possible, on the basis of earlier registered values of tₒₙ and t_{off} following prolonged "on" or "off" phases, to shorten the duration of next prolonged "on" or "off" phases in a self-learning manner, independently of the outcome of step 45. If in an exceptional case, the temperature has then not yet increased or decreased sufficiently, a prolonged "on" or "off" phase respectively can follow again. If the control unit is programmed on the basis of a self-learning algorithm, this is preferably carried out in such a manner that the self-learning jump behavior is based on the behavior after jumps in one or more time intervals of 4-8 hours and preferably 5-6 hours before and/or after one or more points of time, one or more times 24 hours ago.

On completion of the partial re-initialization step 46, the counter n is increased (step 40) just as at the end of a control cycle in the more or less stationary condition.

On the basis of the curve of the output power of the burner 10 shown in Fig. 4 and the condition of the thermostat 8, the above-described control method and the above-described algorithm will be further illustrated. In conformity with step 26, in this case, starting takes place at T0 with an output power pₙ of 50%, i.e. position "7" of the shut-off unit 14. At a time T1 just past x₂*(1+m₁), it appears, when step 32 is carried out, that in the current situation the power 50% is not sufficient for causing the temperature to increase within the set maximum duration of an "on" phase in the stationary condition so that the thermostat 8 changes into the "off" condition. In response to this, in conformity with step 41, the power is increased to 100%. Subsequently, at a time T2, the outcome of step 45 is "yes" for the first time and in conformity with step 46, the power of the burner is brought to a value which is a function of the value of pₕ in the period T0 - T1 and the duration of the prolonged "on" phase (T0 - T2). In the present example, that value is for instance more than 70%, which corresponds to position "11" of the shut-off unit 14. In response to the duration of this "off" phase of T2 to T3 and the initial value X₂ for tₒₙ, the power is then reduced by adjusting the shut-off unit to position "9". In response to the duration of this "on" phase from T3 to T4 and the duration of the preceding "off" phase, the power is then slightly increased again by adjusting the shut-off unit to position "8". Subsequently, from the length of the now following "off" phase from T4 to T5, it appears that in the given situation, this position at least substantially corresponds to the power needed for maintaining the set temperature. On the basis of the ratio between the lengths of the "off" phase from T4 to T5 and the "on" phase from T3 to T4, the position "8" of the shut-off unit 14 is maintained from T5 to T6.

If a stepless shut-off unit is applied, the control can for instance be carried out by sending a control signal corresponding to the intended position of the shut-off unit directly to the shut-off unit or by sending control signals to the shut-off unit which only indicate to which extent the shut-off unit should be further opened or closed.

If a stabler behavior of the control according to the invention is desired than obtained by a control according to above-described example, the power of the burner 10 can be controlled depending on an average of the relation between the registered lengths of the "on" and "off" phases over a progressive time window, in which, in the stationary condition, several "on" and "off" phases fit.

It is also possible to control the power of the burner 10 depending on the duration of and "on" and/or "off" phase in relation to a reference value for the duration of the relevant phase at an actual temperature in the room 1 corresponding to the set temperature. If the burner power is in each case controlled depending on the duration of the most recently past "on" or "off" phase relative to the reference duration for an "on" or "off" phase respectively, a particularly promptly reacting control of the burner power is obtained.

Fig. 5 shows the behavior in the same starting situation as in Fig. 4 of a very simple control according to the invention, wherein during an "on" phase the burner power is increased according as that "on" phase continues longer, and wherein during an "off" phase the burner power is reduced according as that "off" phase continues longer. Also with such very simple control, it is possible to control a gradual regulation of the continuous power of a burner depending on signals received from a room thermostat which has only two positions.

Fig. 6 shows the behavior of yet another embodiment of a heating system according to the invention, again starting from the same starting situation as in Figs. 4 and 5. In this control, like the control illustrated by Fig. 5, the power is increased stepwise during an "on" phase and reduced stepwise during an "off" phase. However, the starting value of each phase, however, always depends on the weighted average during the last five phases, and the speed at which the power is changed stepwise is positively related to the difference between the last value during the previous phase and the first value of the current phase.

It will be understood by anyone skilled in the art that within the framework of the invention, yet many variants are possible other than the above-described variants. The control of the fuel supply may for instance also be effected indirectly by controlling the feed of ambient air and feeding the fuel proportionally thereto. Instead of or in addition to a burner, an electric heating source or the supply of heat coming from a solar panel or from a heat storage may for instance also be controlled.

The advantage that no special, costly thermostat indicating the difference between the set temperature and the measured temperature is required, is of particular importance in situations where a heating system having a controllable continuous power can be applied as a replacement of an existing system of the type described before. After all, in that case, when the known heating systems with controllable continuous power are used, the existing thermostat would have to be replaced as well, and the new thermostat, typically located at a considerable distance from the heat source, and the associated wiring would have to be installed. This involves such additional costs that in many cases it is considered to be unattractive to change to a heating having controllable continuous power. On the other hand, when the present invention is applied, the existing two-position thermostat can be maintained.

## Claims

1. A heating system for heating at least one room, comprising:
a thermostat (8) having a circuit comprising a thermally controlled operating structure (17, 18) for switching the circuit temperature-dependently between an "on" condition and an "off" condition and an anticipation unit (19) for heating anticipatorily, in the "on" condition, the thermally controlled operating structure (17, 18),
a heat source (10),
an energy-feed line (13) connected to the heat source (10) for feeding energy to the heat source (10),
a shut-off structure (14) in the energy-feed line (13) for passing, in its open position, energy and, in its closed position, blocking the energy-feed line (13),
a control unit (15) coupled to said thermostat (8) and said shut-off structure (14) for opening and closing the shut-off structure (14) in response to said conditions of said circuit,
**characterized by**
a clock (20) coupled to or integrated with said control unit (15) for generating time signals,
wherein the shut-off structure (14) is moreover adapted to pass, in at least one intermediate position between said open position and said closed position, a flow of energy reduced relative to said open position, and
wherein the control unit (15) is adapted to process said time signals and to register the duration of at least "on" or "off" phases during which said "on" or "off" conditions respectively of said circuit occur, and is adapted to control said shut-off structure (14) between at least the open position, the closed position and the intermediate position in response to the registered duration of at least said "on" or "off" phases.

2. A heating boiler comprising:
a heat source (10) for heating a heat-transfer medium,
an energy-feed channel (13) connecting to the heat source (10) for feeding energy to the heat source (10),
a shut-off structure (14) in the energy-feed channel (13) for, in an open position, passing energy and, in a closed position, blocking the energy-feed channel (13),
a control unit (15) having a connecting gate (16) for a thermostat (8) and coupled to said shut-off structure (14) for opening and closing the shut-off structure (14) in response to "on" and "off" signals received via said thermostat-connecting gate (16),
**characterized by**
a clock (20) coupled to or integrated with said control structure (15) for generating time signals,
wherein the shut-off structure (14) is moreover adapted to pass, in at least one intermediate position between said open position and said closed position, a flow of energy that is reduced relative to said open position, and
wherein the control structure (15) is adapted to process said time signals and to register the duration of at least "on" or "off" phases of or between said "on" and "off" signals and to control said shut-off structure (14) between at least the open position, the closed position and the intermediate position in response to the registered duration of at least said "on" or "off" phases.

3. A method for controlling a heating, comprising sensing the temperature, switching a circuit between an "on" condition and an "off" condition depending on the sensed temperature, wherein in the "on" condition the sensed temperature is increased anticipatorily, and, in response to said "on" and "off" conditions, operating a heat source (10) between a switched-on position and a switched-off position, **characterized by** registering the duration of at least "on" or "off" phases during which said "on" or "off" conditions respectively occur, and controlling the output power of said heat source (10) in response to the registered duration of said "on" or "off" phases respectively between said positions and at least one intermediate position between said positions.

4. A method according to claim 3, wherein the power of said heat source (10) is controlled depending on the relation between the registered lengths of said "on" and "off" phases.

5. A method according to claim 4, wherein the power of said heat source (10) is controlled depending on an average over a progressive time window of the relation between the registered lengths of said "on" and "off" phases.

6. A method according to any one of claims 3-5, wherein the power of said heat source (10) is controlled depending on the power during at least one preceding one of said phases.

7. A method according to any one of claims 3-6, wherein the power of said heat source (10) during an "on" phase is increased according as said "on" phase continues for a longer period.

8. A method according to any one of claims 3-7, wherein the power of said heat source (10) during an "off" phase is reduced according as said "off" phase continues for a longer period.

9. A method according to any one of claims 3-8, wherein the power of the heat source (10) during an "on" phase is increased to a particular maximum in response to the exceeding of a particular maximum duration of said "on" phase.

10. A method according to any one of claims 3-8, wherein the power of the heat source (10) during an "off" phase is reduced to zero in response to the exceeding of a particular maximum duration of said "off" phase.

11. A method according to claim 9 or 10, wherein on the completion of a last phase during which a maximum duration for the relevant phase has been exceeded, the power of the heat source (10) is controlled depending on at least one power setting which directly followed at least one preceding phase during which said maximum duration was exceeded and which is registered in a period of 4-8 hours and preferably 5-6 hours before and/or after one or several points of time, one or more times 24 hours before the completion of said last phase during which said maximum duration was exceeded.

12. A method according to claim 9 or 10, wherein on the completion of an "on" or "off" phase during which said maximum duration is exceeded, the power of the heat source (10) is controlled depending on a power or average power registered before the beginning of the relevant "on" or "off" phase and the duration of said "on" or "off" phase.
